# EUROPEAN PATENT APPLICATION

(11) **EP 1 886 561 A1**
(43) Date of publication of application: **13.02.2008**
(21) Application number: 06014782.4
(22) Date of filing: 15.07.2006
(51) Int. Cl.: A01N 25/32, A01N 61/00, A01N 43/90, A01N 43/80, A01N 43/56, A01N 43/50, A01N 43/40, A01N 43/08, A01N 41/10, A01P 13/02

(54) **Method of protecting crop plants from herbicidal injury caused by HPPD-inhibitor herbicides**

(71) Applicant: Syngenta Limited, Guildford Surrey GU2 7YH (GB)
(72) Inventor: The designation of the inventor has not yet been filed
(74) Representative: Hölscher, Ingo

(57) **Abstract**

A selectively herbicidal composition which, in addition to comprising formulation adjuvants, such as carriers, solvents and surface-active substances, comprises as active ingredient a mixture of
a) a herbicidally effective amount of at least one HPPD inhibitor herbicide
b) a compound of formula II

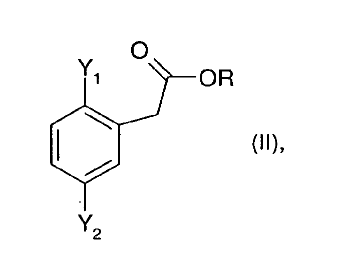

wherein R is hydrogen or C₁-C₆alkyl; and
Y₁ and Y₂ independently from each other, are hydroxy or C₁-C₆alkylcarbonyloxy; and agronomically acceptable salts of these compounds.

## Description

The present invention relates to novel selectively herbicidal compositions for controlling grasses and weeds in crops of useful plants, comprising a HPPD (p-Hydroxy-phenyl-pyruvate dioxygenase) inhibitor herbicide and a safener (counter-agent, antidote) which protects the useful plants but not the grasses and weeds against the phytotoxic action of the herbicide. The present invention relates also to a method of protecting crops of useful plants from the herbicidal injury of a HPPD inhibitor herbicide which comprises treating the useful plants or propagation material thereof or the area under cultivation thereof with an amount, effective for herbicide antagonism, of a safener.

The use of herbicides can result in considerable damage also being caused to crop plants, for example in dependence upon the concentration of the herbicide and the mode of its application, the crop plant, the nature of the soil and the climatic conditions, such as period of exposure to light, temperature and amounts of precipitation. In order to counter those problems, various substances have already been proposed as safeners that are capable of protecting the crop plant against the damaging action of the herbicide, while the herbicidal action on the grasses and weeds to be controlled is virtually unimpaired. It has been found that the proposed safeners often have a very specific action both in respect of the crop plants and in respect of the herbicide and in some cases also in dependence upon the mode of application. This means that a specific safener is often suitable only for a specific crop plant and a particular class of herbicide or a specific herbicide. For example, homogentisic acid is known from JP 7101808 which protect crop plants against the phytotoxic action of cyclohexandione herbicides, such as, for example, 3-((2-methyl-3-methoxy-4-methylsulfonylbenzoyl)- 5-methyl-bicyclo[4.1.0]heptane-2,4-dione.

It has now been found that the compounds of formula II 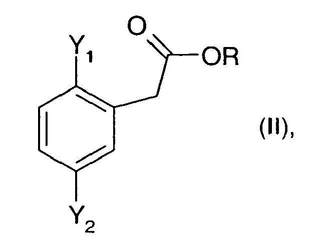 wherein R is hydrogen or C₁-C₆alkyl; and
Y₁ and Y₂ independently from each other, are hydroxy or C₁-C₆alkylcarbonyloxy; and agronomically acceptable salts of these compounds are suitable for protecting crop plants against the phytotoxic action of certain HPPD inhibitor herbicides.

According to the invention, therefore, there is proposed a selectively herbicidal composition which, in addition to comprising formulation adjuvants, such as carriers, solvents and surface-active substances, comprises as active ingredient a mixture of
a) a herbicidally effective amount of at least one herbicide selected from the group consisting of the compounds of formula la 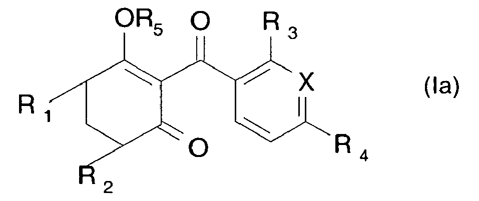 wherein R₁ und R₂ are hydrogen or together an ethylen bridge;
   R₃ is C₁-C₄alkyl, halogen, nitro, C₁-C₄alkoxy-C₁-C₄alkyl, C₁-C₄alkoxy-C₁-C₄alkoxy-C₁-C₄alkyl; or R₃ is a group 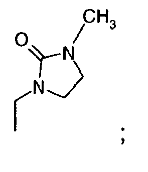 R₄ is C₁-C₄alkylsulfonyl or C₁-C₄haloalkyl;
   R₅ is hydrogen or phenylthio;
   X is methine, nitrogen or C-R₆, wherein R₆ is C₁-C₄haloalkoxy-C₁-C₄alkyl or a group 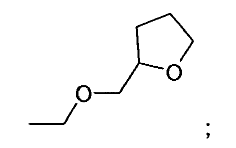 the compounds of formula Ib 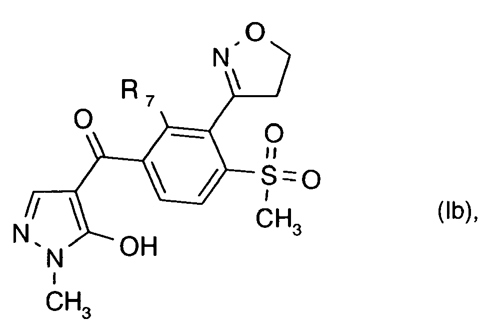 wherein R₇ is methyl or chlorine; the compounds of formula lc 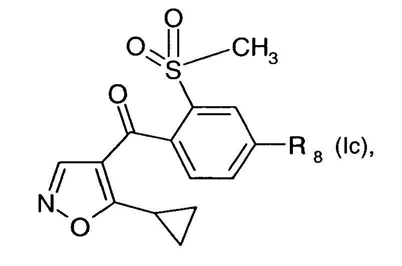 wherein R₈ is halogen or C₁-C₄haloalkyl; the compound of formula Id 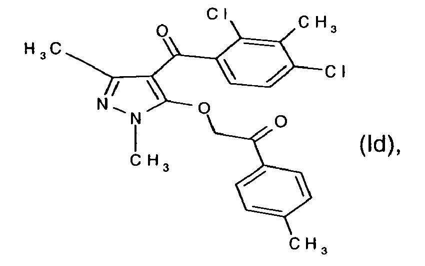 the compound of formula le 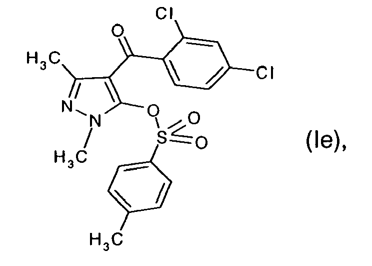 the compound of formula If 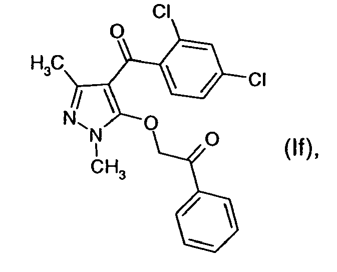 the compound of formula Ig 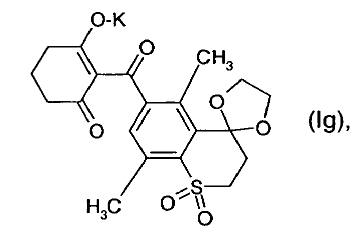 and the free acid thereof, the compound of formula Ih 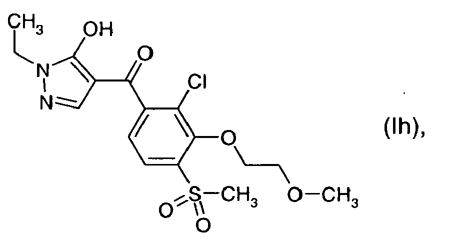 the compound of formula Ii 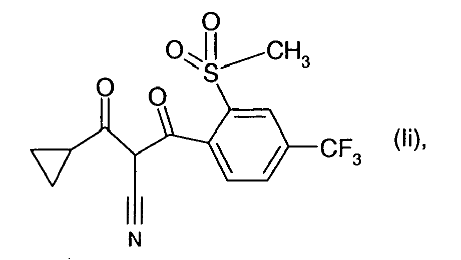 the compound of formula Ij 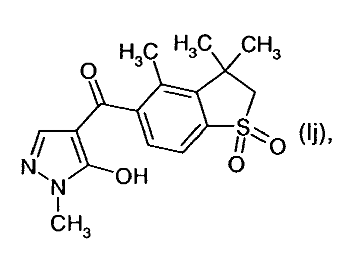 and the compound of formula Ik 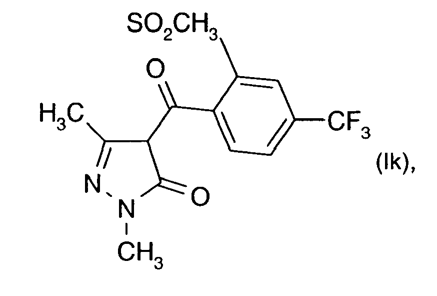 and
b) an amount, effective for herbicide antagonism, of a safener of formula II 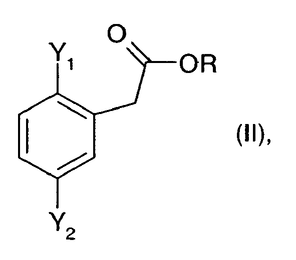 wherein R is hydrogen or C₁-C₆alkyl; and
   Y₁ and Y₂ independently from each other, are hydroxy or C₁-C₆alkylcarbonyloxy; and agronomically acceptable salts of these compounds.

The invention also embraces the salts which can be formed by the compounds of the formula II with amines, alkali metal and alkaline earth metal bases or quarternary ammonium bases. Among the alkali metal and alkaline earth metal hydroxides, the hydroxides of lithium, sodium, potassium, magnesium or calcium, in particular those of sodium or potassium, may be emphasized as salt formers.

Examples of amines suitable for ammonium salt formation are both ammonia and primary, secondary and tertiary C₁-C₁₈alkylamines, C₁-C₄hydroxyalkylamines and C₂-C₄a[koxy-alkylamines, for example methylamine, ethylamine, n-propylamine, isopropylamine, the four isomeric butylamines, n-amylamine, isoamylamine, hexylamine, heptylamine, octylamine, nonylamine, decylamine, pentadecylamine, hexadecylamine, heptadecylamine, octadecylamine, methylethylamine, methylisopropylamine, methylhexylamine, methylnonylamine, methylpentadecylamine, methyloctadecylamine, ethylbutylamine, ethylheptylamine, ethyloctylamine, hexylheptylamine, hexyloctylamine, dimethylamine, diethylamine, di-n-propylamine, diisopropylamine, di-n-butylamine, di-n-amylamine, diisoamylamine, dihexylamine, diheptylamine, dioctylamine, ethanolamine, n-propanolamine, isopropanolamine, N,N-diethanolamine, N-ethylpropanolamine, N-butylethanolamine, allylamine, n-butenyl-2-amine, n-pentenyl-2-amine, 2,3-dimethylbutenyl-2-amine, dibutenyl-2-amine, n-hexenyl-2-amine, propylenediamine, trimethylamine, triethylamine, tri-n-propylamine, triisopropylamine, tri-n-butylamine, triisobutylamine, tri-sec-butylamine, tri-n-amylamine, methoxyethylamine and ethoxyethylamine; heterocyclic amines, for example pyridine, quinoline, isoquinoline, morpholine, piperidine, pyrrolidine, indoline, quinuclidine and azepine; primary arylamines, for example anilines, methoxyanilines, ethoxyanilines, o,m,p-toluidines, phenylenediamines, benzidines, naphthylamines and o,m,p-chloroanilines; but in particular triethylamine, isopropylamine and diisopropylamine.

Preferred quarternary ammonium bases which are suitable for salt formation correspond, for example, to the formula [N(Rₐ R_{b}R_{c}R_{d} )]OH, in which Rₐ, R_{b}, R_{c} and R_{d} independently of one another are C₁-C₄alkyl. Other suitable tetraalkylammonium bases with other anions can be obtained, for example, by anion exchange reactions.

The alkyl groups occurring in the definitions of the substituents can be straight-chain or branched and are, for example, methyl, ethyl, n-propyl, isopropyl, n-butyl, sec-butyl, isobutyl, tert-butyl, pentyl and hexyl and their branched isomers. Alkoxy radicals are derived from the alkyl radicals mentioned.

Halogen is generally fluorine, chlorine, bromine or iodine, preferably fluorine and chlorine. This also applies, correspondingly, to halogen in combination with other meanings, such as haloalkyl.

Alkylsulfonyl is, for example, methylsulfonyl, ethylsulfonyl, propylsulfonyl, isopropylsulfonyl, n-butylsulfonyl, isobutylsulfonyl, sec-butylsulfonyl or tert-butylsulfonyl; preferably methylsulfonyl or ethylsulfonyl.

The invention relates also to a method for the selective control of grasses and weeds in crops of useful plants, which comprises treating the useful plants or propagation material thereof or the area under cultivation thereof simultaneously or at different times with a herbicidally effective amount of a herbicide of formula la to Ik as mentioned above and an amount, effective for herbicide antagonism, of a safener of formula II as mentioned above.

Herbicide carryover can restrict crop rotation following application of soil residual herbicides in the previous year(s). Rotational restrictions following herbicide application vary depending upon the herbicide used, rotational crop, and various environmental factors influencing the duration of herbicide soil persistence at or above injurious levels.

In the cultivation of crop plants, especially on a commercial scale, correct crop rotation is crucially important for yield stability (the achievement of high yields of good quality over a long period) and for the economic success of an agronomic business. For example, across large areas of the main maize-growing regions of the USA (the "central corn belt"), soya is grown as the subsequent crop to maize in over 75 % of cases. Selective weed control in maize crops is increasingly being carried out using HPPD inhibitor herbicides. Although that class of herbicides has excellent suitability for that purpose, it can result in agronomically unacceptable phytotoxic damage to the crop plants in subsequent crops, especially in subsequent soya crops, because certain soya varieties are sensitive to even very small residues of such HPPD inhibitor herbicides ("carry-over" damage).

Therefore the invention also relates to a method of protecting crops of useful plants from the herbicidal injury of at least one HPPD inhibitor herbicide selected from the group consisting of the compounds of formula la 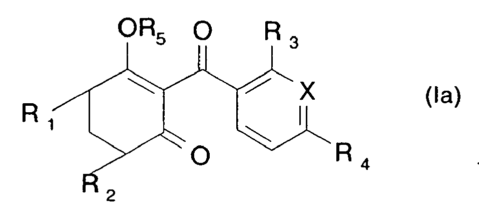 wherein R₁ und R₂ are hydrogen or together an ethylen bridge;
R₃ is halogen, nitro, C₁-C₄alkoxy-C₁-C₄alkyl, C₁-C₄alkoxy-C₁-C₄alkoxy-C₁-C₄alkyl; or R₃ is a group 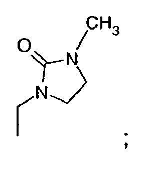 R₄ is C₁-C₄alkylsulfonyl or C₁-C₄haloalkyl;
R₅ is hydrogen or phenylthio;
X is methine, nitrogen or C-R₆, wherein R₆ is C₁-C₄haloalkoxy-C₁-C₄alkyl or a group 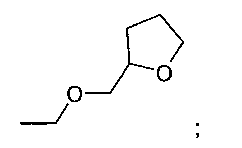 the compounds of formula Ib 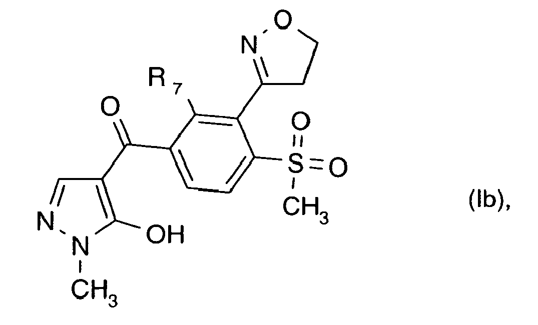 wherein R₇ is methyl or chlorine; the compounds of formula lc 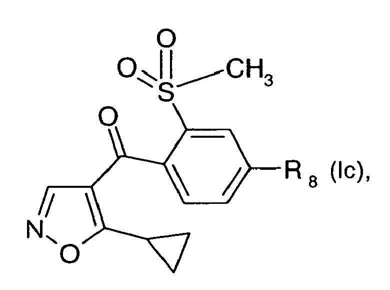 wherein R₈ is halogen or C₁-C₄haloalkyl; the compound of formula Id 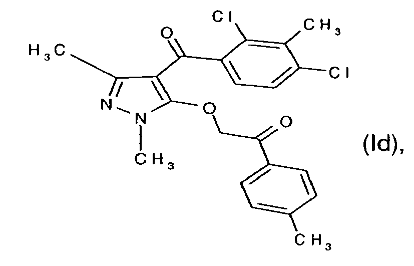 the compound of formula le 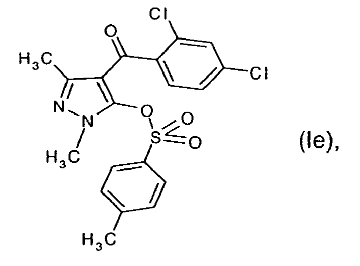 the compound of formula If 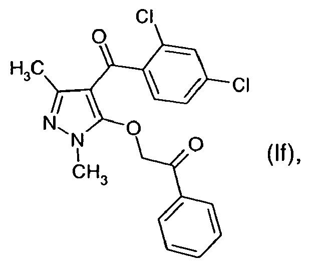 the compound of formula Ig 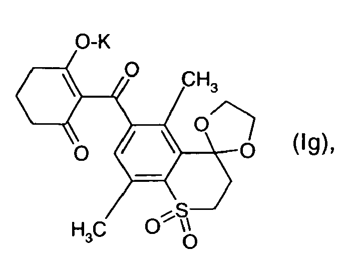 and the free acid thereof, the compound of formula Ih 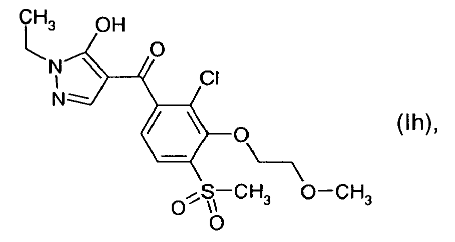 the compound of formula li 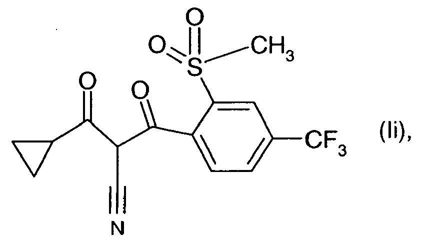 the compound of formula Ij 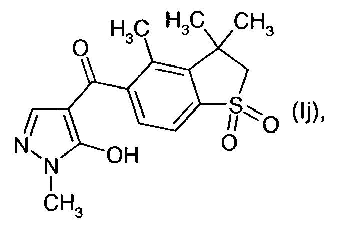 and the compound of formula Ik 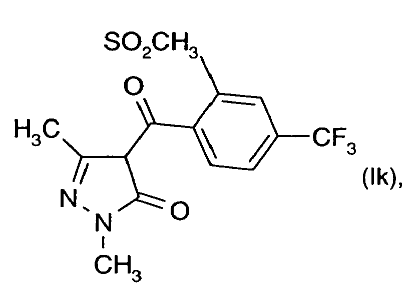 which comprises
treating the useful plants or propagation material thereof or the area under cultivation thereof, after said HPPD inhibitor herbicide has been applied, with an amount, effective for herbicide antagonism, of a safener of formula II 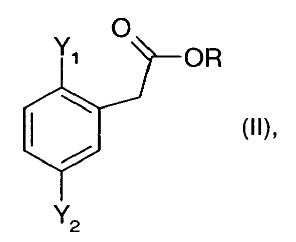 wherein R is hydrogen or C₁-C₆alkyl; and
Y₁ and Y₂ independently from each other, are hydroxy or C₁-C₆alkylcarbonyloxy; and agronomically acceptable salts of these compounds.

The alkyl groups appearing in the substituent definitions may be straight-chain or branched and are, for example, methyl, ethyl, n-propyl, isopropyl, n-butyl, sec-butyl, isobutyl or tert-butyl. Halogen is generally fluorine, chlorine, bromine or iodine, preferably fluorine or chlorine. The same is true of halogen in conjunction with other meanings, such as haloalkyl.

Haloalkyl groups preferably have a chain length of from 1 to 4 carbon atoms. Haloalkyl is, for example, fluoromethyl, difluoromethyl, trifluoromethyl, chloromethyl, dichloromethyl, trichloromethyl, 2,2,2-trifluoroethyl, 2-fluoroethyl, 2-chloroethyl, pentafluoroethyl, 1,1-difluoro-2,2,2-trichloroethyl, 2,2,3,3-tetrafluoroethyl or 2,2,2-trichloroethyl; preferably trichloromethyl, difluorochloromethyl, difluoromethyl, trifluoromethyl or dichlorofluoromethyl.

Alkoxyalkoxy groups preferably have a chain length of from 1 to 8 carbon atoms. Examples of alkoxyalkoxy are: methoxymethoxy, methoxyethoxy, methoxypropoxy, ethoxymethoxy, ethoxyethoxy, propoxymethoxy and butoxybutoxy. Alkoxyalkyl groups have a chain length of preferably from 1 to 6 carbon atoms. Alkoxyalkyl is, for example, methoxymethyl, methoxyethyl, ethoxymethyl, ethoxyethyl, n-propoxymethyl, n-propoxyethyl, isopropoxymethyl or isopropoxyethyl.

Alkoxy-alkoxy-alkyl groups preferably have a chain length of from 1 to 8 carbon atoms. Examples of alkoxy-alkoxy-alkyl are: methoxymethoxymethyl, methoxyethoxymethyl, ethoxymethoxymethyl and methoxyethoxyethyl.

The compounds of formula la to Ik are known or can be prepared according to known methods. Compounds of formula la and their preparation are known from WO/0015615, WO/0015615 , WO 02/085118, WO 00/021924, US-A-5,006,158 and US-A-4,780,127. Compounds of formula lb are described in WO 98/31681, and mixtures of those compounds with herbicides are known from WO 99/65314. Compounds of formula Ic are described in US-A-5,656,573. Compound of formula ld is described in The Pesticide Manual 12^{th} ed., under Entry No. 71, compound of formula le under Entry No. 663 and compound of formula If under Entry No. 666. The compound of formula lg is described in Chemical Abstracts under the registration number CAS 192708-91-1. The compound of formula lh is described in EP-A-0352543. The compound of formula li is described in EP-A- 0 496 631, the compound of formula Ij in WO 04/021788. The compound of formula Ik has the Chemical Abstracts registration number 365400-11-9.

The compounds of formula II are known or can be prepared according to methods known to persons skilled in the art. The compound of formula II, wherein R is hydrogen and Y₁ and Y₂ is hydroxy has the CAS Registration No. 451-13-8. The preparation is described in Biochem. J. vol. 43, page 606-610 (1948). Further preparation methods for compounds of formula II are described, for example, in Synthesis (1980), 2, 111 or Journal of the American Chemical Society, 109(3), 846-56; 1987.

The compounds of formula II are especially suitable for the protection of crops of useful plants from the herbicidal injury of herbicides as listed in the following Table 1:

**Table 1: HPPD inhibitor herbicides:**

| | Comp. No. | Structure: |
|---|---|---|
| | 1.01 | 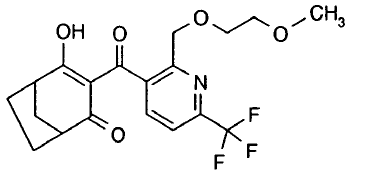 |
| | 1.02 | 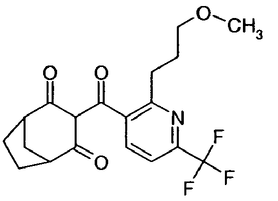 |
| | 1.03 | 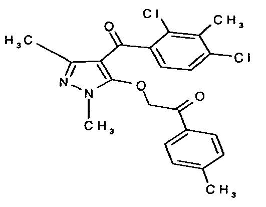 |
| | 1.04 | 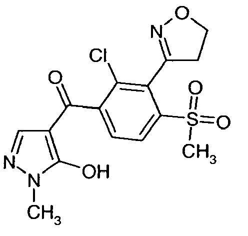 |
| | 1.05 | 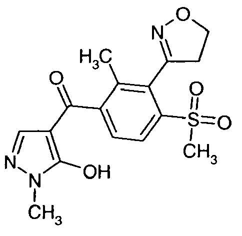 |
| | 1.06 | 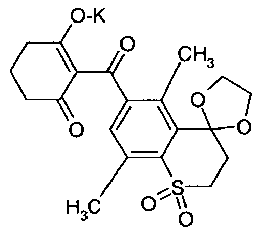 and the free acid thereof |
| | 1.07 | 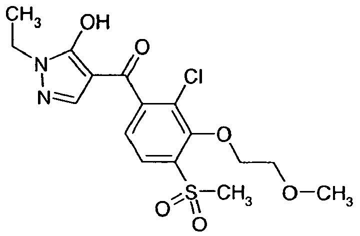 |
| | 1.08 | 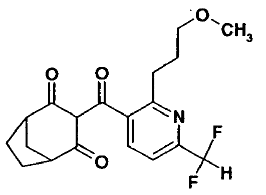 |
| | 1.09 | 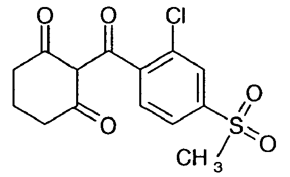 |
| | 1.10 | 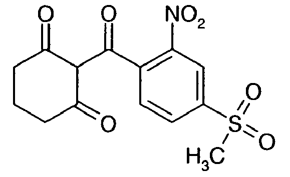 |
| | 1.11 | 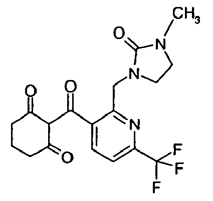 |
| | 1.12 | 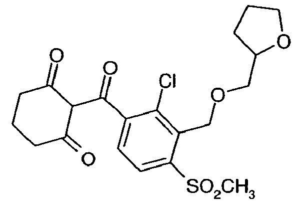 |
| | 1.13 | 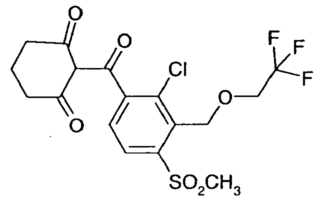 |
| | 1.14 | 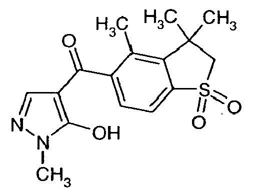 |
| | 1.15 | 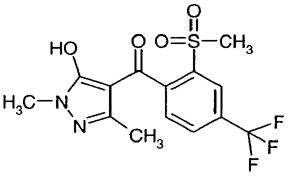 |
| | 1.16 | 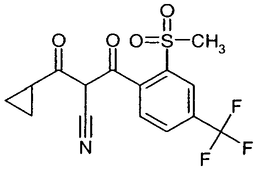 |
| | 1.17 | 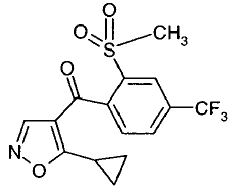 |
| | 1.18 | 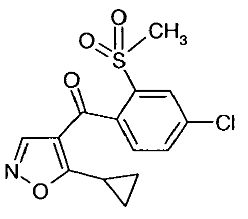 |
| | 1.19 | 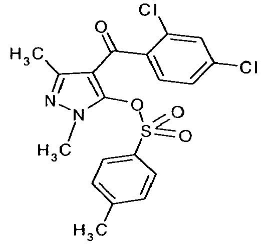 |
| | 1.20 | 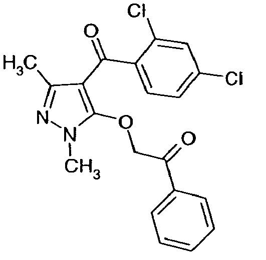 |
| | 1.21 | 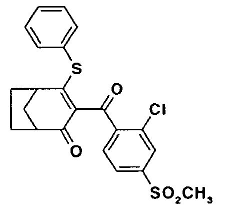 |
| | 1.22 | 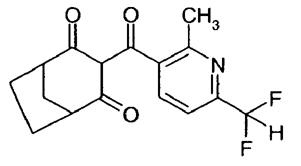 |
| | 1.23 | 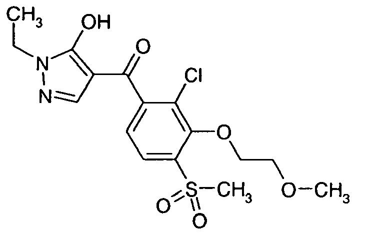 |

A preferred group of compounds of formula II are those, wherein
R is hydrogen or C₁-C₄alkyl, in particular hydrogen; and
Y₁ and Y₂ independently from each other, are hydroxy or C₁-C₄alkylcarbonyloxy;

From the compounds of formula II, the compound wherein R is hydrogen and Y₁ and Y₂ are hydroxy, or the sodium, potassium or ammonium salts thereof are especially preferred.

Preferred compounds of formula II for the use according to the present invention are listed in Table 2:

**Table 2: Preferred compounds of formula II:**

| Comp. No. | Y₁ | Y₂ | R |
|---|---|---|---|
| 2.1 | OH | OH | H |
| 2.2 | methylcarbonyloxy | methylcarbonyloxy | H |
| 2.3 | ethylcarbonyloxy | ethylcarbonyloxy | H |
| 2.4 | n-propylcarbonyloxy | n-propylcarbonyloxy | H |
| 2.5 | i-propylcarbonyloxy | i-propylcarbonyloxy | H |
| 2.6 | n-butylcarbonyloxy | n-butylcarbonyloxy | H |
| 2.7 | i-butylcarbonyloxy | i-butylcarbonyloxy | H |
| 2.8 | tert.-butylcarbonyloxy | tert.-butylcarbonyloxy | H |
| 2.9 | OH | OH | CH₃ |
| 2.10 | methylcarbonyloxy | methylcarbonyloxy | CH₃ |
| 2.11 | ethylcarbonyloxy | ethylcarbonyloxy | CH₃ |
| 2.12 | n-propylcarbonyloxy | n-propylcarbonyloxy | CH₃ |
| 2.13 | i-propylcarbonyloxy | i-propylcarbonyloxy | CH₃ |
| 2.14 | n-butylcarbonyloxy | n-butylcarbonyloxy | CH₃ |
| 2.15 | i-butylcarbonyloxy | i-butylcarbonyloxy | CH₃ |
| 2.16 | tert.-butylcarbonyloxy | tert.-butylcarbonyloxy | CH₃ |
| 2.17 | OH | OH | C₂H₅ |
| 2.18 | methylcarbonyloxy | methylcarbonyloxy | C₂H₅ |
| 2.19 | ethylcarbonyloxy | ethylcarbonyloxy | C₂H₅ |
| 2.20 | n-propylcarbonyloxy | n-propylcarbonyloxy | C₂H₅ |
| 2.21 | i-propylcarbonyloxy | i-propylcarbonyloxy | C₂H₅ |
| 2.22 | n-butylcarbonyloxy | n-butylcarbonyloxy | C₂H₅ |
| 2.23 | i-butylcarbonyloxy | i-butylcarbonyloxy | C₂H₅ |
| 2.24 | tert.-butylcarbonyloxy | tert.-butylcarbonyloxy | C₂H₅ |
| 2.25 | OH | OH | -CH₂-CH₂-CH₃ |
| 2.26 | methylcarbonyloxy | methylcarbonyloxy | -CH₂-CH₂-CH₃ |
| 2.27 | ethylcarbonyloxy | ethylcarbonyloxy | -CH₂-CH₂-CH₃ |
| 2.28 | n-propylcarbonyloxy | n-propylcarbonyloxy | -CH₂-CH₂-CH₃ |
| 2.29 | i-propylcarbonyloxy | i-propylcarbonyloxy | -CH₂-CH₂-CH₃ |
| 2.30 | n-butylcarbonyloxy | n-butylcarbonyloxy | -CH₂-CH₂-CH₃ |
| 2.31 | i-butylcarbonyloxy | i-butylcarbonyloxy | -CH₂-CH₂-CH₃ |
| 2.32 | tert.-butylcarbonyloxy | tert.-butylcarbonytoxy | -CH₂-CH₂-CH₃ |
| 2.33 | OH | OH | -CH(CH₃)-CH₃ |
| 2.34 | methylcarbonyloxy | methylcarbonyloxy | -CH(CH₃)-CH₃ |
| 2.35 | ethylcarbonyloxy | ethylcarbonyloxy | -CH(CH₃)-CH₃ |
| 2.36 | n-propylcarbonyloxy | n-propylcarbonyloxy | -CH(CH₃)-CH₃ |
| 2.37 | i-propylcarbonyloxy | i-propylcarbonyloxy | -CH(CH₃)-CH₃ |
| 2.38 | n-butylcarbonyloxy | n-butylcarbonyloxy | -CH(CH₃)-CH₃ |
| 2.39 | i-butylcarbonyloxy | i-butylcarbonyloxy | -CH(CH₃)-CH₃ |
| 2.40 | tert.-butylcarbonyloxy | tert.-butylcarbonyloxy | -CH(CH₃)-CH₃ |
| 2.41 | OH | OH | -CH₂-CH₂-CH₂-CH₃ |
| 2.42 | methylcarbonyloxy | methylcarbonyloxy | -CH₂-CH₂-CH₂-CH₃ |
| 2.43 | ethylcarbonyloxy | ethylcarbonyloxy | -CH₂-CH₂-CH₂-CH₃ |
| 2.44 | n-propylcarbonyloxy | n-propylcarbonyloxy | -CH₂-CH₂-CH₂-CH₃ |
| 2.45 | i-propylcarbonyloxy | i-propylcarbonyloxy | -CH₂-CH₂-CH₂-CH₃ |
| 2.46 | n-butylcarbonyloxy | n-butylcarbonyloxy | -CH₂-CH₂-CH₂-CH₃ |
| 2.47 | i-butylcarbonyloxy | i-butylcarbonyloxy | -CH₂-CH₂-CH₂-CH₃ |
| 2.48 | tert.-butylcarbonyloxy | tert.-butylcarbonyloxy | -CH₂-CH₂-CH₂-CH₃ |
| 2.49 | OH | OH | -CH₂-CH(CH₃)₂ |
| 2.50 | methylcarbonyloxy | methylcarbonyloxy | -CH₂-CH(CH₃)₂ |
| 2.51 | ethylcarbonyloxy | ethylcarbonyloxy | -CH₂-CH(CH₃)₂ |
| 2.52 | n-propylcarbonyloxy | n-propylcarbonyloxy | -CH₂-CH(CH₃)₂ |
| 2.53 | i-propylcarbonyloxy | i-propylcarbonyloxy | -CH₂-CH(CH₃)₂ |
| 2.54 | n-butylcarbonyloxy | n-butylcarbonyloxy | -CH₂-CH(CH₃)₂ |
| 2.55 | i-butylcarbonyloxy | i-butylcarbonyloxy | -CH₂-CH(CH₃)₂ |
| 2.56 | tert.-butylcarbonyloxy | tert.-butylcarbonyloxy | -CH₂-CH(CH₃)₂ |
| 2.57 | OH | OH | -C(CH₃)₃ |
| 2.58 | methylcarbonyloxy | methylcarbonyloxy | -C(CH₃)₃ |
| 2.59 | ethylcarbonyloxy | ethylcarbonyloxy | -C(CH₃)₃ |
| 2.60 | n-propylcarbonyloxy | n-propylcarbonyloxy | -C(CH₃)₃ |
| 2.61 | i-propylcarbonyloxy | i-propylcarbonyloxy | -C(CH₃)₃ |
| 2.62 | n-butylcarbonyloxy | n-butylcarbonyloxy | -C(CH₃)₃ |
| 2.63 | i-butylcarbonyloxy | i-butylcarbonyloxy | -C(CH₃)₃ |
| 2.64 | tert.-butylcarbonyloxy | tert.-butylcarbonyloxy | -C(CH₃)₃ |
| 2.65 | OH | methylcarbonyloxy | H |
| 2.66 | OH | ethylcarbonyloxy | H |
| 2.67 | OH | n-propylcarbonyloxy | H |
| 2.68 | OH | i-propylcarbonyloxy | H |
| 2.69 | OH | n-butylcarbonyloxy | H |
| 2.70 | OH | i-butylcarbonyloxy | H |
| 2.71 | OH | tert.-butylcarbonyloxy | H |
| 2.72 | OH | methylcarbonyloxy | CH₃ |
| 2.73 | OH | ethylcarbonyloxy | CH₃ |
| 2.74 | OH | n-propylcarbonyloxy | CH₃ |
| 2.75 | OH | i-propylcarbonyloxy | CH₃ |
| 2.76 | OH | n-butylcarbonyloxy | CH₃ |
| 2.77 | OH | i-butylcarbonyloxy | CH₃ |
| 2.78 | OH | tert.-butylcarbonyloxy | CH₃ |
| 2.79 | OH | methylcarbonyloxy | C₂H₅ |
| 2.80 | OH | ethylcarbonyloxy | C₂H₅ |
| 2.81 | OH | n-propylcarbonyloxy | C₂H₅ |
| 2.82 | OH | i-propylcarbonyloxy | C₂H₅ |
| 2.83 | OH | n-butylcarbonyloxy | C₂H₅ |
| 2.84 | OH | i-butylcarbonyloxy | C₂H₅ |
| 2.85 | OH | tert.-butylcarbonyloxy | C₂H₅ |
| 2.86 | OH | methylcarbonyloxy | -CH₂-CH₂-CH₃ |
| 2.87 | OH | ethylcarbonyloxy | -CH₂-CH₂-CH₃ |
| 2.88 | OH | n-propylcarbonyloxy | -CH₂-CH₂-CH₃ |
| 2.89 | OH | i-propylcarbonyloxy | -CH₂-CH₂-CH₃ |
| 2.90 | OH | n-butylcarbonyloxy | -CH₂-CH₂-CH₃ |
| 2.91 | OH | i-butylcarbonyloxy | -CH₂-CH₂-CH₃ |
| 2.92 | OH | tert.-butylcarbonyloxy | -CH₂-CH₂-CH₃ |
| 2.93 | OH | methylcarbonyloxy | -CH(CH₃)-CH₃ |
| 2.94 | OH | ethylcarbonyloxy | -CH(CH₃)-CH₃ |
| 2.95 | OH | n-propylcarbonyloxy | -CH(CH₃)-CH₃ |
| 2.96 | OH | i-propylcarbonyloxy | -CH(CH₃)-CH₃ |
| 2.97 | OH | n-butylcarbonyloxy | -CH(CH₃)-CH₃ |
| 2.98 | OH | i-butylcarbonyloxy | -CH(CH₃)-CH₃ |
| 2.99 | OH | tert.-butylcarbonyloxy | -CH(CH₃)-CH₃ |
| 2.100 | OH | methylcarbonyloxy | -CH₂-CH₂-CH₂-CH₃ |
| 2.101 | OH | ethylcarbonyloxy | -CH₂-CH₂-CH₂-CH₃ |
| 2.102 | OH | n-propylcarbonyloxy | -CH₂-CH₂-CH₂-CH₃ |
| 2.103 | OH | i-propylcarbonyloxy | -CH₂-CH₂-CH₂-CH₃ |
| 2.104 | OH | n-butylcarbonyloxy | -CH₂-CH₂-CH₂-CH₃ |
| 2.105 | OH | i-butylcarbonyloxy | -CH₂-CH₂-CH₂-CH₃ |
| 2.106 | OH | tert.-butylcarbonyloxy | -CH₂-CH₂-CH₂-CH₃ |
| 2.107 | OH | methylcarbonyloxy | -CH₂-CH(CH₃)₂ |
| 2.108 | OH | ethylcarbonyloxy | -CH₂-CH(CH₃)₂ |
| 2.109 | OH | n-propylcarbonyloxy | -CH₂-CH(CH₃)₂ |
| 2.110 | OH | i-propylcarbonyloxy | -CH₂-CH(CH₃)₂ |
| 2.111 | OH | n-butylcarbonyloxy | -CH₂-CH(CH₃)₂ |
| 2.112 | OH | i-butylcarbonyloxy | -CH₂-CH(CH₃)₂ |
| 2.113 | OH | tert.-butylcarbonyloxy | -CH₂-CH(CH₃)₂ |
| 2.114 | OH | methylcarbonyloxy | -C(CH₃)₃ |
| 2.115 | OH | ethylcarbonyloxy | -C(CH₃)₃ |
| 2.116 | OH | n-propylcarbonyloxy | -C(CH₃)₃ |
| 2.117 | OH | i-propylcarbonyloxy | -C(CH₃)₃ |
| 2.118 | OH | n-butylcarbonyloxy | -C(CH₃)₃ |
| 2.119 | OH | i-butylcarbonyloxy | -C(CH₃)₃ |
| 2.120 | OH | tert.-butylcarbonyloxy | -C(CH₃)₃ |
| 2.121 | methylcarbonyloxy | OH | H |
| 2.122 | ethylcarbonyloxy | OH | H |
| 2.123 | n-propylcarbonyloxy | OH | H |
| 2.124 | i-propylcarbonyloxy | OH | H |
| 2.125 | n-butylcarbonyloxy | OH | H |
| 2.126 | i-butylcarbonyloxy | OH | H |
| 2.127 | tert.-butylcarbonyloxy | OH | H |
| 2.128 | methylcarbonyloxy | OH | CH₃ |
| 2.129 | ethylcarbonyloxy | OH | CH₃ |
| 2.130 | n-propylcarbonyloxy | OH | CH₃ |
| 2.131 | i-propylcarbonyloxy | OH | CH₃ |
| 2.132 | n-butylcarbonyloxy | OH | CH₃ |
| 2.133 | i-butylcarbonyloxy | OH | CH₃ |
| 2.134 | tert.-butylcarbonyloxy | OH | CH₃ |
| 2.135 | methylcarbonyloxy | OH | C₂H₅ |
| 2.136 | ethylcarbonyloxy | OH | C₂H₅ |
| 2.137 | n-propylcarbonyloxy | OH | C₂H₅ |
| 2.138 | i-propylcarbonyloxy | OH | C₂H₅ |
| 2.139 | n-butylcarbonyloxy | OH | C₂H₅ |
| 2.140 | i-butylcarbonyloxy | OH | C₂H₅ |
| 2.141 | tert.-butylcarbonyloxy | OH | C₂H₅ |
| 2.142 | methylcarbonyloxy | OH | -CH₂-CH₂-CH₃ |
| 2.143 | ethylcarbonyloxy | OH | -CH₂-CH₂-CH₃ |
| 2.144 | n-propylcarbonyloxy | OH | -CH₂-CH₂-CH₃ |
| 2.145 | i-propylcarbonyloxy | OH | -CH₂-CH₂-CH₃ |
| 2.146 | n-butylcarbonyloxy | OH | -CH₂-CH₂-CH₃ |
| 2.147 | i-butylcarbonyloxy | OH | -CH₂-CH₂-CH₃ |
| 2.148 | tert.-butylcarbonyloxy | OH | -CH₂-CH₂-CH₃ |
| 2.149 | methylcarbonyloxy | OH | -CH(CH₃)-CH₃ |
| 2.150 | ethylcarbonyloxy | OH | -CH(CH₃)-CH₃ |
| 2.151 | n-propylcarbonyloxy | OH | -CH(CH₃)-CH₃ |
| 2.152 | i-propylcarbonyloxy | OH | -CH(CH₃)-CH₃ |
| 2.153 | n-butylcarbonyloxy | OH | -CH(CH₃)-CH₃ |
| 2.154 | i-butylcarbonyloxy | OH | -CH(CH₃)-CH₃ |
| 2.155 | tert.-butylcarbonyloxy | OH | -CH(CH₃)-CH₃ |
| 2.156 | methylcarbonyloxy | OH | -CH₂-CH₂-CH₂-CH₃ |
| 2.157 | ethylcarbonyloxy | OH | -CH₂-CH₂-CH₂-CH₃ |
| 2.158 | n-propylcarbonyloxy | OH | -CH₂-CH₂-CH₂-CH₃ |
| 2.159 | i-propylcarbonyloxy | OH | -CH₂-CH₂-CH₂-CH₃ |
| 2.160 | n-butylcarbonyloxy | OH | -CH₂-CH₂-CH₂-CH₃ |
| 2.161 | i-butylcarbonyloxy | OH | -CH₂-CH₂-CH₂-CH₃ |
| 2.162 | tert.-butylcarbonyloxy | OH | -CH₂-CH₂-CH₂-CH₃ |
| 2.163 | methylcarbonyloxy | OH | -CH₂-CH(CH₃)₂ |
| 2.164 | ethylcarbonyloxy | OH | -CH₂-CH(CH₃)₂ |
| 2.165 | n-propylcarbonyloxy | OH | -CH₂-CH(CH₃)₂ |
| 2.166 | i-propylcarbonyloxy | OH | -CH₂-CH(CH₃)₂ |
| 2.167 | n-butylcarbonyloxy | OH | -CH₂-CH(CH₃)₂ |
| 2.168 | i-butylcarbonyloxy | OH | -CH₂-CH(CH₃)₂ |
| 2.169 | tert.-butylcarbonyloxy | OH | -CH₂-CH(CH₃)₂ |
| 2.170 | methylcarbonyloxy | OH | -C(CH₃)₃ |
| 2.171 | ethylcarbonyloxy | OH | -C(CH₃)₃ |
| 2.172 | n-propylcarbonyloxy | OH | -C(CH₃)₃ |
| 2.173 | i-propylcarbonyloxy | OH | -C(CH₃)₃ |
| 2.174 | n-butylcarbonyloxy | OH | -C(CH₃)₃ |
| 2.175 | i-butylcarbonyloxy | OH | -C(CH₃)₃ |
| 2.176 | tert.-butylcarbonyloxy | OH | -C(CH₃)₃ |

Preferred compositions according to the present invention comprise as active ingredients the combinations listed in Table 3:

**Table 3: preferred compositions according to the present invention:**

| Herbicide Compound No. | | Safener |
|---|---|---|
| 1.01 | and | one compound selected from the group consisting of the compounds listed in Table 2 |
| 1.02 | and | one compound selected from the group consisting of the compounds listed in Table 2 |
| 1.03 | and | one compound selected from the group consisting of the compounds listed in Table 2 |
| 1.04 | and | one compound selected from the group consisting of the compounds listed in Table 2 |
| 1.05 | and | one compound selected from the group consisting of the compounds listed in Table 2 |
| 1.06 | and | one compound selected from the group consisting of the compounds listed in Table 2 |
| 1.07 | and | one compound selected from the group consisting of the compounds listed in Table 2 |
| 1.08 | and | one compound selected from the group consisting of the compounds listed in Table 2 |
| 1.09 | and | one compound selected from the group consisting of the compounds listed in Table 2 |
| 1.10 | and | one compound selected from the group consisting of the compounds listed in Table 2 |
| 1.11 | and | one compound selected from the group consisting of the compounds listed in Table 2 |
| 1.12 | and | one compound selected from the group consisting of the compounds listed in Table 2 |
| 1.13 | and | one compound selected from the group consisting of the compounds listed in Table 2 |
| 1.14 | and | one compound selected from the group consisting of the compounds listed in Table 2 |
| 1.15 | and | one compound selected from the group consisting of the compounds listed in Table 2 |
| 1.16 | and | one compound selected from the group consisting of the compounds listed in Table 2 |
| 1.17 | and | one compound selected from the group consisting of the compounds listed in Table 2 |
| 1.18 | and | one compound selected from the group consisting of the compounds listed in Table 2 |
| 1.19 | and | one compound selected from the group consisting of the compounds listed in Table 2 |
| 1.20 | and | one compound selected from the group consisting of the compounds listed in Table 2 |
| 1.21 | and | one compound selected from the group consisting of the compounds listed in Table 2 |
| 1.22 | and | one compound selected from the group consisting of the compounds listed in Table 2 |
| 1.23 | and | one compound selected from the group consisting of the compounds listed in Table 2 |

Very especially preferred compositions according to the present invention comprise as active ingredients the compound No. 2.1 and one compound selected from the group consisting of the compounds listed in Table 1.

Crop plants that can be protected by the safeners of formula II against the damaging action of the above-mentioned herbicides include especially cereals, cotton, soybeans, sugar beet, sugar cane, plantation crops, rape, maize and rice, in particular soybeans.

The term "crops" is to be understood as including also crops that have been rendered tolerant to herbicides like bromoxynil or classes of herbicides (such as, for example, HPPD inhibitors, ALS inhibitors, for example primisulfuron, prosulfuron and trifloxysulfuron, EPSPS (5-enol-pyrovyl-shikimate-3-phosphate-synthase) inhibitors, GS (glutamine synthetase) inhibitors) as a result of conventional methods of breeding or genetic engineering. An example of a crop that has been rendered tolerant to imidazolinones, e.g. imazamox, by conventional methods of breeding (mutagenesis) is Clearfield® summer rape (Canola). Examples of crops that have been rendered tolerant to herbicides or classes of herbicides by genetic engineering methods include glyphosate- and glufosinate-resistant maize and soya varieties commercially available under the trade names RoundupReady®, Herculex I® and LibertyLink®.

The term "crops" is to be understood as including also crop plants which have been so transformed by the use of recombinant DNA techniques that they are capable of synthesising one or more selectively acting toxins, such as are known, for example, from toxin-producing bacteria, especially those of the genus Bacillus.

Toxins that can be expressed by such transgenic plants include, for example, insecticidal proteins, for example insecticidal proteins from Bacillus cereus or Bacillus popliae; or insecticidal proteins from Bacillus thuringiensis, such as δ-endotoxins, e.g. CryIA(b), CryIA(c), CryIF, CryIF(a2), CryIIA(b), CryIIIA, CryIIIB(b1) or Cry9c, or vegetative insecticidal proteins (VIP), e.g. VIP1, VIP2, VIP3 or VIP3A; or insecticidal proteins of bacteria colonising nematodes, for example Photorhabdus spp. or Xenorhabdus spp., such as Photorhabdus luminescens, Xenorhabdus nematophilus; toxins produced by animals, such as scorpion toxins, arachnid toxins, wasp toxins and other insect-specific neurotoxins; toxins produced by fungi, such as Streptomycetes toxins, plant lectins, such as pea lectins, barley lectins or snowdrop lectins; agglutinins; proteinase inhibitors, such as trypsine inhibitors, serine protease inhibitors, patatin, cystatin, papain inhibitors; ribosome-inactivating proteins (RIP), such as ricin, maize-RIP, abrin, luffin, saporin or bryodin; steroid metabolism enzymes, such as 3-hydroxysteroidoxidase, ecdysteroid-UDP-glycosyl-transferase, cholesterol oxidases, ecdysone inhibitors, HMG-COA-reductase, ion channel blockers, such as blockers of sodium or calcium channels, juvenile hormone esterase, diuretic hormone receptors, stilbene synthase, bibenzyl synthase, chitinases and glucanases.

In the context of the present invention there are to be understood by δ-endotoxins, for example CryIA(b), CryIA(c), CryIF, CryIF(a2), CryIIA(b), CryIIIA, CryIIIB(b1) or Cry9c, or vegetative insecticidal proteins (VIP), for example VIP1, VIP2, VIP3 or VIP3A, expressly also hybrid toxins, truncated toxins and modified toxins. Hybrid toxins are produced recombinantly by a new combination of different domains of those proteins (see, for example, WO 02/15701). Truncated toxins, for example a truncated CryIA(b), are known. In the case of modified toxins, one or more amino acids of the naturally occurring toxin are replaced. In such amino acid replacements, preferably non-naturally present protease recognition sequences are inserted into the toxin, such as, for example, in the case of CryIIIA055, a cathepsin-D-recognition sequence is inserted into a CryIIIA toxin (see WO 03/018810).

Examples of such toxins or transgenic plants capable of synthesising such toxins are disclosed, for example, in EP-A-0 374 753, WO 93/07278, WO 95/34656, EP-A-0 427 529, EP-A-451 878 and WO 03/052073.

The processes for the preparation of such transgenic plants are generally known to the person skilled in the art and are described, for example, in the publications mentioned above. Cryl-type deoxyribonucleic acids and their preparation are known, for example, from WO 95/34656, EP-A-0 367 474, EP-A-0 401 979 and WO 90/13651.

The toxin contained in the transgenic plants imparts to the plants tolerance to harmful insects. Such insects can occur in any taxonomic group of insects, but are especially commonly found in the beetles (Coleoptera), two-winged insects (Diptera) and butterflies (Lepidoptera).

Transgenic plants containing one or more genes that code for an insecticidal resistance and express one or more toxins are known and some of them are commercially available. Examples of such plants are: YieldGard® (maize variety that expresses a CrylA(b) toxin); YieldGard Rootworm® (maize variety that expresses a CryIIIB(b1) toxin); YieldGard Plus® (maize variety that expresses a CrylA(b) and a CryIIIB(b1) toxin); Starlink® (maize variety that expresses a Cry9(c) toxin); Herculex I® (maize variety that expresses a CryIF(a2) toxin and the enzyme phosphinothricine N-acetyltransferase (PAT) to achieve tolerance to the herbicide glufosinate ammonium); NuCOTN 33B® (cotton variety that expresses a CrylA(c) toxin); Bollgard I® (cotton variety that expresses a CrylA(c) toxin); Bollgard II® (cotton variety that expresses a CrylA(c) and a CryIIA(b) toxin); VIPCOT® (cotton variety that expresses a VIP toxin); NewLeaf® (potato variety that expresses a CryIIIA toxin); Nature-Gard® Agrisure® GT Advantage (GA21 glyphosate-tolerant trait), Agrisure® CB Advantage (Bt11 corn borer (CB) trait) and Protecta®.

Further examples of such transgenic crops are:
1. **Bt11 Maize** from Syngenta Seeds SAS, Chemin de l'Hobit 27, F-31 790 St. Sauveur, France, registration number C/FR/96/05/10. Genetically modified *Zea mays* which has been rendered resistant to attack by the European corn borer *(Ostrinia nubilalis* and *Sesamia nonagrioides)* by transgenic expression of a truncated CryIA(b) toxin. Bt11 maize also transgenically expresses the enzyme PAT to achieve tolerance to the herbicide glufosinate ammonium.
2. **Bt176 Maize** from Syngenta Seeds SAS, Chemin de l'Hobit 27, F-31 790 St. Sauveur, France, registration number C/FR/96/05/10. Genetically modified *Zea mays* which has been rendered resistant to attack by the European corn borer *(Ostrinia nubilalis* and *Sesamia nonagrioides)* by transgenic expression of a CrylA(b) toxin. Bt176 maize also transgenically expresses the enzyme PAT to achieve tolerance to the herbicide glufosinate ammonium.
3. **MIR604 Maize** from Syngenta Seeds SAS, Chemin de l'Hobit 27, F-31 790 St. Sauveur, France, registration number C/FR/96/05/10. Maize which has been rendered insect-resistant by transgenic expression of a modified CryIIIA toxin. This toxin is Cry3A055 modified by insertion of a cathepsin-D-protease recognition sequence. The preparation of such transgenic maize plants is described in WO 03/018810.
4. **MON 863 Maize** from Monsanto Europe S.A. 270-272 Avenue de Tervuren, B-1150 Brussels, Belgium, registration number C/DE/02/9. MON 863 expresses a CryIIIB(b1) toxin and has resistance to certain Coleoptera insects.
5. **IPC 531** Cotton from Monsanto Europe S.A. 270-272 Avenue de Tervuren, B-1150 Brussels, Belgium, registration number C/ES/96/02.
6. **1507 Maize** from Pioneer Overseas Corporation, Avenue Tedesco, 7 B-1160 Brussels, Belgium, registration number C/NL/00/10. Genetically modified maize for the expression of the protein Cry1 F for achieving resistance to certain Lepidoptera insects and of the PAT protein for achieving tolerance to the herbicide glufosinate ammonium.
7. **NK603 × MON 810 Maize** from Monsanto Europe S.A. 270-272 Avenue de Tervuren, B-1150 Brussels, Belgium, registration number C/GB/02/M3/03. Consists of conventionally bred hybrid maize varieties by crossing the genetically modified varieties NK603 and MON 810. NK603 × MON 810 Maize transgenically expresses the protein CP4 EPSPS, obtained from *Agrobacterium sp.* strain CP4, which imparts tolerance to the herbicide Roundup® (contains glyphosate), and also a CryIA(b) toxin obtained from *Bacillus thuringiensis subsp. kurstaki* which brings about tolerance to certain Lepidoptera, include the European corn borer.

Transgenic crops of insect-resistant plants are also described in BATS (Zentrum für Biosicherheit und Nachhaltigkeit, Zentrum BATS, Clarastrasse 13, 4058 Basel, Switzerland) Report 2003, (http://bats.ch).

The term "crops" is to be understood as including also crop plants which have been so transformed by the use of recombinant DNA techniques that they are capable of synthesising antipathogenic substances having a selective action, such as, for example, the so-called "pathogenesis-related proteins" (PRPs, see e.g. EP-A-0 392 225). Examples of such antipathogenic substances and transgenic plants capable of synthesising such antipathogenic substances are known, for example, from EP-A-0 392 225, WO 95/33818, and EP-A-0 353 191. The methods of producing such transgenic plants are generally known to the person skilled in the art and are described, for example, in the publications mentioned above.

Antipathogenic substances which can be expressed by such transgenic plants include, for example, ion channel blockers, such as blockers for sodium and calcium channels, for example the viral KP1, KP4 or KP6 toxins; stilbene synthases; bibenzyl synthases; chitinases; glucanases; the so-called "pathogenesis-related proteins" (PRPs; see e.g. EP-A-0 392 225); antipathogenic substances produced by microorganisms, for example peptide antibiotics or heterocyclic antibiotics (see e.g. WO 95/33818) or protein or polypeptide factors involved in plant pathogen defence (so-called "plant disease resistance genes", as described in WO 03/000906).

The term "plant propagation material" is understood to denote all the generative parts of the plant, such as seeds, which can be used for the multiplication of the latter and vegetative plant material such as cuttings and tubers (for example, potatoes). There may be mentioned, e.g., the seeds (in the strict sense), roots, fruits, tubers, bulbs, rhizomes, parts of plants. Germinated plants and young plants, which are to be transplanted after germination or after emergence from the soil, may also be mentioned. These young plants may be protected before transplantation by a total or partial treatment by immersion.

Parts of plant and plant organs that grow at later point in time are any sections of a plant that develop from a plant propagation material, such as a seed. Parts of plant, plant organs, and plants can also benefit from the pathogenic and/or pest damage protection achieved by the application of the combination on to the plant propagation material. In an embodiment, certain parts of plant and certain plant organs that grow at later point in time can also be considered as plant propagation material, which can themselves be applied (or treated) with the combination; and consequently, the plant, further parts of the plant and further plant organs that develop from the treated parts of plant and treated plant organs can also benefit from the pathogenic and/or pest damage protection achieved by the application of the combination on to the certain parts of plant and certain plant organs.

Generally, a safener compound can be treated together and/or sequentially on to plant propagation material with further active compound(s). These further compounds can be pesticidal active ingredients, fertilizers or micronutrient donors or other preparations that influence plant growth, such as inoculants.

The plant propagation material treated by a compound of formula II in combination with one or more pesticidal active ingredients are, therefore, resistant to disease and/or pest damage and provide protection against phytoxicity of later herbicide foliar applications; accordingly, the present invention also provides a pathogenic and/or pest resistant plant propagation material which is treated with compound of formula II and one or more pesticidal active ingredients and consequently at least the active compounds are adhered on the propagation material, such a seed.

In the event, a compound of formula II is applied simultaneously with further active compound(s) on to plant propagation material, it may be applied as a composition, in which case the compound of formula II and further active compound(s) can be obtained from a separate formulation source and mixed together (known as a tank-mix, ready-to-apply, spray broth, or slurry), or they can be obtained as single formulation mixture source (known as a pre-mix, concentrate, formulated compound (or product)), and optionally mixed together with other active compound(s), like pesticides.

The compound of formula II of the present invention may be mixed with other pesticides, such as fungicides, insecticides and nematicides.

A single pesticidal active ingredient may have activity in more than area of pest control, for example, a pesticide may have fungicide, insecticide and nematicide activity. Specifically, aldicarb is known for insecticide, acaricide and nematicide activity, while metam is known for insecticide, herbicide, fungicide and nematicide activity, and thiabendazole and captan can provide nematicide and fungicide activity.

Suitable examples of insecticides, fungicides and nematicides include triazole derivatives, strobilurins, carbamate (including thiocarbamate), benzimidazoles (thiabendazole), N-trihalomethylthio compounds (captan), substituted benzenes, carboxamides, phenylamides and phenylpyrroles, and mixtures thereof; and neonicotinoids, abamectin, carbamates and pyrethroids.

Methods for applying or treating active compounds, such as safeners and pesticidal active ingredients (e.g. insecticides, fungicides, nematicides, molluscicides) and mixtures thereof, on to plant propagation material, especially seeds, are known in the art, and include dressing, coating, pelleting and soaking application methods of the propagation material.

The active compounds can be applied to the seeds using conventional treating techniques and machines, such as fluidized bed techniques, the roller mill method, rotostatic seed treaters, and drum coaters. Other methods, such as spouted beds may also be useful. The seeds may be presized before coating. After coating, the seeds are typically dried and then transferred to a sizing machine for sizing. Such procedures are known in the art.

In a preferred embodiment, the active compounds are applied or treated on to the plant propagation material by a method such that the germination is not induced; generally seed soaking induces germination because the moisture content of the resulting seed is too high. Accordingly, examples of suitable methods for applying (or treating) a plant propagation material, such as a seed, is seed dressing, seed coating or seed pelleting and alike.

It is preferred that the plant propagation material is a seed.

Areas under cultivation are to be understood as including land where the crop plants are already growing or where propagation material, preferably seed, of the crop plants has been sown as well as land intended for the cultivation of those crop plants.

The compounds of formula II and the compositions according to the invention are suitable for all methods of application customary in agriculture, such as, for example, pre-emergence application, post-emergence application and seed treatment, such as seed dressing. Depending upon the intended use, a safener of formula II can be used for pretreating the propagation material, preferably seed, of the crop plant (e.g., dressing the seed or seedlings) or introduced into the soil before or after sowing.

It can, however, also be applied alone or together with the herbicide of formula la to Ik as mentioned above before or after emergence of the plants. The treatment of the plants or the propagation material with the safener can therefore take place in principle independently of the time of application of the herbicide.

In a preferred embodiment of the present invention, the safener of formula II is applied after the application of the HPPD inhibitor herbicide of formula la to Ik as mentioned above.

According to the present invention, it is also possible to apply the safener after the harvest of the crop which has been treated with the HPPD inhibitor herbicide. This embodiment is especially useful to protect a rotational crop planted in the next season on the same area under cultivation from the herbicidal injury of the HPPD inhibitor herbicide if said rotational crop is sensitive against said herbicide.

In an especially preferred embodiment of the present invention, the safener of formula II is used for pretreating the propagation material, especially seed, of soya crops (e.g. dressing the seed or seedlings) or introduced into the soil before or after sowing of the soya crops which is grown as the subsequent crop to maize (crop rotation) and the maize crops have been treated with the HPPD inhibitor herbicide of formula la to Ik as mentioned above.

As a rule, a herbicide has to be applied to the soya crops in order to control weeds and grasses. Preferably said herbicide is different from a HPPD inhibitor herbicide. Especially suitable herbicidal compositions for the use in said soya crops comprise as active ingredients glyphosate or glufosinate wherein said soya crops have been rendered tolerant to said herbicides.

A very especially preferred embodiment of the present invention comprises a method for the protection of soya crops from the herbicidal injury of a HPPD inhibitor herbicide of formula la to Ik as mentioned above, wherein
a) said soya crops are sown as a rotational crop to maize on the same area under cultivation,
b) said maize crops have been treated with said HPPD inhibitor herbicide,
c) said soya crop is treated with a herbicide which is different from said HPPD inhibitor herbicide, characterised in that
said soya crops or propagation material thereof or the area under cultivation thereof are treated with an amount, effective for herbicide antagonism, of a compound of formula II 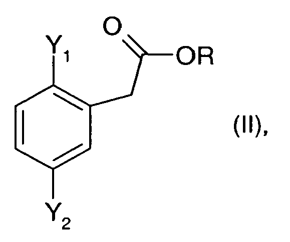 wherein R is hydrogen or C₁-C₆alkyl; and
Y₁ and Y₂ independently from each other, are hydroxy or C₁-C₆alkylcarbonyloxy; and agronomically acceptable salts of these compounds.

The rate of application of safener relative to the HPPD inhibitor herbicide is largely dependent upon the mode of application. In the case of field treatment, generally from 0.001 to 5.0 kg of safener/ha, preferably from 0.001 to 0.5 kg of safener/ha, and generally from 0.001 to 2 kg of herbicide/ha, but preferably from 0.005 to 1 kg/ha, are applied. In the case of seed treatment, such as seed dressing, generally from 0.001 to 10 g of safener/kg of seed, preferably from 0.05 to 2 g of safener/kg of seed, are applied. When the safener is applied in liquid form, for example, with seed soaking, shortly before sowing, it is advantageous to use safener solutions which contain the active ingredient in a concentration of from 1 to 10 000 ppm, preferably from 100 to 1000 ppm.

Although it is believed that the present method can be applied to a seed in any physiological state, it is preferred that the seed be in a sufficiently durable state that it incurs no damage during the treatment process. Typically, the seed would be a seed that had been harvested from the field; removed from the plant; and separated from any cob, stalk, outer husk, and surrounding pulp or other non-seed plant material. The seed would preferably also be biologically stable to the extent that the treatment would cause no biological damage to the seed. It is believed that the treatment can be applied to the seed at any time between harvest of the seed and sowing of the seed or during the sowing process (seed directed applications). The seed may also be primed either before or after the treatment.

Even distribution of the active compounds and adherence thereof to the seeds is desired during propagation material treatment. Treatment could vary from a thin film (dressing) of the formulation containing the compound(s) on a plant propagation material, such as a seed, where the original size and/or shape are recognizable to an intermediary state (such as a coating) and then to a thicker film (such as pelleting with many layers of different materials (such as carriers, for example, clays; different formulations, such as of other active compound(s); polymers; and colourants) where the original shape and/or size of the seed is no longer recognisable.

The seed treatment occurs to an unsown seed, and the term "unsown seed" is meant to include seed at any period between the harvest of the seed and the sowing of the seed in the ground for the purpose of germination and growth of the plant.

Treatment to an unsown seed is not meant to include those practices in which the active ingredient is applied to the soil but would include any application practice that would target the seed during the planting process.

Preferably, the treatment occurs before sowing of the seed so that the sown seed has been pre-treated with the active compounds. In particular, seed coating or seed pelleting are preferred as a treatment. As a result of the treatment, the active compounds are adhered on to the seed and therefore available for pest and/or disease control.

The treated seeds can be stored, handled, sowed and tilled in the same manner as any other active ingredient treated seed.

The mixture of a herbicidally effective amount of the compound of formula la to Ik and an amount, effective for herbicide antagonism, of the compound of formula II can be used in unmodified form as a selectively herbicidal composition, or - if the active components are applied separately from each other - as two independent active ingredient compositions.

The compositions according to the invention are, however, generally formulated in a variety of ways using formulation adjuvants, such as carriers, solvents and surface-active substances. The formulations can be in various physical forms, for example in the form of dusting powders, gels, wettable powders, water-dispersible granules, water-dispersible tablets, effervescent compressed tablets, emulsifiable concentrates, microemulsifiable concentrates, oil-in-water emulsions, oil flowables, aqueous dispersions, oily dispersions, suspoemulsions, capsule suspensions, emulsifiable granules, soluble liquids, water-soluble concentrates (with water or a water-miscible organic solvent as carrier), impregnated polymer films or in other forms known, for example, from the Manual on Development and Use of FAO Specifications for Plant Protection Products, 5th Edition, 1999. Such formulations can either be used directly or are diluted prior to use. Diluted formulations can be prepared, for example, with water, liquid fertilisers, micronutrients, biological organisms, oil or solvents.

The formulations can be prepared, for example, by mixing the active ingredient with formulation adjuvants in order to obtain compositions in the form of finely divided solids, granules, solutions, dispersions or emulsions. The active ingredients can also be formulated with other adjuvants, for example finely divided solids, vegetable oils, modified vegetable oils, mineral oils, organic solvents, water, surface-active substances or combinations thereof. The active ingredients can also be contained in very fine microcapsules consisting of a polymer. Microcapsules contain the active ingredients in a porous carrier. This enables the active ingredients to be released into their surroundings in controlled amounts (e.g. slow release). Microcapsules usually have a diameter of from 0.1 to 500 microns. They contain active ingredients in an amount of about from 25 to 95 % by weight of the capsule weight. The active ingredients can be present in the form of a monolithic solid, in the form of fine particles in solid or liquid dispersion or in the form of a suitable solution. The encapsulating membranes comprise, for example, natural and synthetic gums, cellulose, styrene-butadiene copolymers, polyacrylonitrile, polyacrylate, polyester, polyamides, polyureas, polyurethane or chemically modified polymers and starch xanthates or other polymers that are known to the person skilled in the art in this connection. Alternatively it is possible for very fine microcapsules to be formed wherein the active ingredient is present in the form of finely divided particles in a solid matrix of a base substance, but in that case the microcapsule is not encapsulated.

The formulation adjuvants suitable for the preparation of the compositions according to the invention are known *per se.* As liquid carriers there may be used: water, toluene, xylene, petroleum ether, vegetable oils, acetone, methyl ethyl ketone, cyclohexanone, acid anhydrides, acetonitrile, acetophenone, amyl acetate, 2-butanone, butylenes carbonate, chlorobenzene, cyclohexane, cyclohexanol, alkyl esters of acetic acid, diacetone alcohol, 1,2-dichloropropane, diethanolamine, p-diethylbenzene, diethylene glycol, diethylene glycol abietate, diethylene glycol butyl ether, diethylene glycol ethyl ether, diethylene glycol methyl ether, N,N-dimethylformamide, dimethyl sulfoxide, 1,4-dioxane, dipropylene glycol, dipropylene glycol methyl ether, dipropylene glycol dibenzoate, diproxitol, alkylpyrrolidone, ethyl acetate, 2-ethyl hexanol, ethylene carbonate, 1,1,1-trichloroethane, 2-heptanone, alpha-pinene, d-limonene, ethyl lactate, ethylene glycol, ethylene glycol butyl ether, ethylene glycol methyl ether, gamma-butyrolactone, glycerol, glycerol acetate, glycerol diacetate, glycerol triacetate, hexadecane, hexylene glycol, isoamyl acetate, isobornyl acetate, isooctane, isophorone, isopropylbenzene, isopropyl myristate, lactic acid, laurylamine, mesityl oxide, methoxypropanol, methyl isoamyl ketone, methyl isobutyl ketone, methyl laurate, methyl octanoate, methyl oleate, methylene chloride, m-xylene, n-hexane, n-octylamine, octadecanoic acid, octylamine acetate, oleic acid, oleylamine, o-xylene, phenol, polyethylene glycol (PEG 400), propionic acid, propyl lactate, propylene carbonate, propylene glycol, propylene glycol methyl ether, p-xylene, toluene, triethyl phosphate, triethylene glycol, xylenesulfonic acid, paraffin, mineral oil, trichloroethylene, perchloroethylene, ethyl acetate, amyl acetate, butyl acetate, propylene glycol methyl ether, diethylene glycol methyl ether, methanol, ethanol, isopropanol, and higher molecular weight alcohols, such as amyl alcohol, tetrahydrofurfuryl alcohol, hexanol, octanol, ethylene glycol, propylene glycol, glycerol, N-methyl-2-pyrrolidone and the like. Water is generally the carrier of choice for the dilution of the concentrates. Suitable solid carriers are, for example, talc, titanium dioxide, pyrophyllite clay, silica, attapulgite clay, kieselguhr, limestone, calcium carbonate, bentonite, calcium montomorillonite, cottonseed husks, wheatmeal, soybean flour, pumice, wood flour, ground walnut shells, lignin and similar materials, as described, for example, in CFR 180.1001. (c) & (d).

A large number of surface-active substances can advantageously be used both in solid and in liquid formulations, especially in those formulations which can be diluted with a carrier prior to use. Surface-active substances may be anionic, cationic, non-ionic or polymeric and they may be used as emulsifiying, wetting or suspending agents or for other purposes. Typical surface-active substances include, for example, salts of alkyl sulfates, such as diethanolammonium lauryl sulfate; salts of alkylarylsulfonates, such as calcium dodecylbenzenesulfonate; alkylphenol-alkylene oxide addition products, such as nonylphenol ethoxylate; alcohol-alkylene oxide addition products, such as tridecyl alcohol ethoxylate; soaps, such as sodium stearate; salts of alkylnaphthalenesulfonates, such as sodium dibutylnaphthalenesulfonate; dialkyl esters of sulfosuccinate salts, such as sodium di(2-ethylhexyl)sulfosuccinate; sorbitol esters, such as sorbitol oleate; quaternary amines, such as lauryl trimethylammonium chloride, polyethylene glycol esters of fatty acids, such as polyethylene glycol stearate; block copolymers of ethylene oxide and propylene oxide; and salts of mono- and di-alkyl phosphate esters; and also further substances described e.g. in "McCutcheon's Detergents and Emulsifiers Annual", MC Publishing Corp., Ridgewood, New Jersey, 1981.

Further adjuvants which can usually be used in pesticidal formulations include crystallisation inhibitors, viscosity-modifying substances, suspending agents, dyes, anti-oxidants, foaming agents, light absorbers, mixing aids, anti-foams, complexing agents, neutralising or pH-modifying substances and buffers, corrosion-inhibitors, fragrances, wetting agents, absorption improvers, micronutrients, plasticisers, glidants, lubricants, dispersants, thickeners, anti-freezes, microbiocides, and also liquid and solid fertilisers.

The formulations may also comprise additional active substances, for example further herbicides, plant growth regulators, fungicides or insecticides.

The compositions according to the invention can additionally include an additive comprising an oil of vegetable or animal origin, a mineral oil, alkyl esters of such oils or mixtures of such oils and oil derivatives. The amount of oil additive used in the composition according to the invention is generally from 0.01 to 10 %, based on the spray mixture. For example, the oil additive can be added to the spray tank in the desired concentration after the spray mixture has been prepared. Preferred oil additives comprise mineral oils or an oil of vegetable origin, for example rapeseed oil, olive oil or sunflower oil, emulsified vegetable oil, such as AMIGO® (Rhône-Poulenc Canada Inc.), alkyl esters of oils of vegetable origin, for example the methyl derivatives, or an oil of animal origin, such as fish oil or beef tallow. A preferred additive contains, for example, as active components essentially 80 % by weight alkyl esters of fish oils and 15 % by weight methylated rapeseed oil, and also 5 % by weight of customary emulsifiers and pH modifiers. Especially preferred oil additives comprise alkyl esters of C₈-C₂₂ fatty acids, especially the methyl derivatives of C₁₂-C₁₈ fatty acids, for example the methyl esters of lauric acid, palmitic acid and oleic acid, being important. Those esters are known as methyl laurate (CAS-111-82-0), methyl palmitate (CAS-112-39-0) and methyl oleate (CAS-112-62-9). A preferred fatty acid methyl ester derivative is Emery® 2230 and 2231 (Cognis GmbH). Those and other oil derivatives are also known from the Compendium of Herbicide Adjuvants, 5th Edition, Southern Illinois University, 2000.

The application and action of the oil additives can be further improved by combining them with surface-active substances, such as non-ionic, anionic or cationic surfactants. Examples of suitable anionic, non-ionic and cationic surfactants are listed on pages 7 and 8 of WO 97/34485. Preferred surface-active substances are anionic surfactants of the dodecyl-benzylsulfonate type, especially the calcium salts thereof, and also non-ionic surfactants of the fatty alcohol ethoxylate type. Special preference is given to ethoxylated C₁₂-C₂₂ fatty alcohols having a degree of ethoxylation of from 5 to 40. Examples of commercially available surfactants are the Genapol types (Clariant AG). Also preferred are silicone surfactants, especially polyalkyl-oxide-modified heptamethyltrisiloxanes, which are commercially available e.g. as Silwet L-77®, and also perfluorinated surfactants. The concentration of surface-active substances in relation to the total additive is generally from 1 to 30 % by weight. Examples of oil additives that consist of mixtures of oils or mineral oils or derivatives thereof with surfactants are Edenor ME SU®, Turbocharge® (Syngenta AG, CH) and Actipron® (BP Oil UK Limited, GB).

The said surface-active substances may also be used in the formulations alone, that is to say without oil additives.

Furthermore, the addition of an organic solvent to the oil additive/surfactant mixture can contribute to a further enhancement of action. Suitable solvents are, for example, Solvesso® (ESSO) and Aromatic Solvent® (Exxon Corporation).The concentration of such solvents can be from 10 to 80 % by weight of the total weight. Such oil additives, which may be in admixture with solvents, are described, for example, in US-A-4 834 908. A commercially available oil additive disclosed therein is known by the name MERGE® (BASF Corporation). A further oil additive that is preferred according to the invention is SCORE® (Syngenta Crop Protection Canada.)

In addition to the oil additives listed above, in order to enhance the activity of the compositions according to the invention it is also possible for formulations of alkylpyrrolidones, (e.g. Agrimax®) to be added to the spray mixture. Formulations of synthetic latices, such as, for example, polyacrylamide, polyvinyl compounds or poly-1-p-menthene (e.g. Bond®, Courier® or Emerald®) can also be used. Solutions that contain propionic acid, for example Eurogkem Pen-e-trate®, can also be mixed into the spray mixture as activity-enhancing agents.

The herbicidal formulations generally contain from 0.1 to 99 % by weight, especially from 0.1 to 95 % by weight, of an active ingredient mixture of the compound of formula I and, if applicable, the compound of formula II and from 1 to 99.9 % by weight of a formulation adjuvant, which preferably includes from 0 to 25 % by weight of a surface-active substance. Whereas commercial products will preferably be formulated as concentrates, the end user will normally employ dilute formulations.

Various methods and techniques come into consideration for the use of safeners of formula II, or compositions comprising them, for protecting crop plants against the damaging effects of HPPD inhibitor herbicide of formula la to Ik, for example the following:
i) Seed dressing
   a) Dressing the seeds with a wettable powder formulation of a compound of formula II by shaking in a vessel until the formulation is evenly distributed over the surface of the seeds (dry dressing). In this method about from 1 to 500 g of compound of formula II (from 4 g to 2 kg of wettable powder) are used per 100 kg of seed material.
   b) Dressing the seeds with an emulsifiable concentrate of the compound of formula II in accordance with method a) (wet dressing).
   c) Dressing by immersing the seed material in a liquor containing from 100 to 1000 ppm of the compound of formula II for 1 to 72 hours and optionally subsequently drying the seeds (immersion dressing).
   Dressing the seed material or treating the germinated seedling are naturally the preferred methods of application, because the treatment with the active ingredient is directed entirely at the target crop. It is customary to use from 1 to 1000 g of antidote, especially from 5 to 250 g of antidote, per 100 kg of seed material, but depending upon the method used, which also allows the addition of other active ingredients or micronutrients, it is possible to use concentrations above and below the limits indicated (repeat dressing).
ii) Application in the form of a tank mixture
   A liquid formulation of a mixture of antidote and HPPD inhibitor herbicide (in a respective quantity ratio of from 10:1 1 to 1:100) is used, the rate of application of herbicide being from 0.005 to 5.0 kg per hectare. Such tank mixtures are applied before or after sowing.
iii) Application to the seed furrow
   The compound of formula II is introduced into the open, sown seed furrow in the form of an emulsifiable concentrate, wettable powder or granules. When the seed furrow has been covered over, the HPPD inhibitor herbicide is applied by the pre-emergence method in customary manner.
iv) Controlled release of active ingredient
   A solution of the compound of formula II is applied to granular mineral carriers or polymerised granules (urea/formaldehyde) and dried. If desired, a coating can be applied (coated granules), which allows the active ingredient to be released in metered amounts over a specific period of time.

Preferred formulations have especially the following compositions (% = percent by weight; "active ingredient mixture" denotes a mixture of the compound of formula I and the compound of formula II):

| Emulsifiable concentrates: | |
|---|---|
| active ingredient mixture: | 1 to 95 %, preferably 60 to 90 % |
| surface-active agent: | 1 to 30 %, preferably 5 to 20 % |
| liquid carrier: | 1 to 80 %, preferably 1 to 35 % |

| Dusts: | |
|---|---|
| active ingredient mixture: | 0.1 to 10 %, preferably 0.1 to 5 % |
| solid carrier: | 99.9 to 90 %, preferably 99.9 to 99 % |

| Suspension concentrates: | |
|---|---|
| active ingredient mixture: | 5 to 75 %, preferably 10 to 50 % |
| water: | 94 to 24 %, preferably 88 to 30 % |
| surface-active agent: | 1 to 40 %, preferably 2 to 30 % |

| Wettable powders: | |
|---|---|
| active ingredient mixture: | 0.5 to 90 %, preferably 1 to 80 % |
| surface-active agent: | 0.5 to 20 %, preferably 1 to 15 % |
| solid carrier: | 5 to 95 %, preferably 15 to 90 % |

| Granules: | |
|---|---|
| active ingredient mixture: | 0.1 to 30 %, preferably 0.1 to 15 % |
| solid carrier: | 99.5 to 70 %, preferably 97 to 85 % |

The following Examples further illustrate, but do not limit, the invention.

| Formulation Examples for mixtures of herbicides of formula la to Ik and safeners of formula II (% = percent by weight) | | | | |
|---|---|---|---|---|
| F1. Emulsifiable concentrates | a) | b) | c) | d) |
| active ingredient mixture calcium dodecylbenzene- | 5% | 10 % | 25% | 50 % |
| sulfonate | 6 % | 8 % | 6 % | 8 % |
| castor oil polyglycol ether (36 mol of ethylene oxide) | 4 % | - | 4 % | 4 % |
| octylphenol polyglycol ether (7-8 mol of ethylene oxide) | - | 4 % | - | 2 % |
| NMP | - | - | 10% | 20% |
| arom. hydrocarbon mixture C₉-C₁₂ | 85% | 78% | 55% | 16 % |

Emulsions of any desired concentration can be prepared from such concentrates by dilution with water.

| F2. Solutions | a) | b) | c) | d) |
|---|---|---|---|---|
| active ingredient mixture | 5 % | 10 % | 50 % | 90 % |
| 1-methoxy-3-(3-methoxy-propoxy)-propane | - | 20 % | 20 % | - |
| polyethylene glycol MW 400 | 20 % | 10 % | - | - |
| NMP | - | - | 30 % | 10 % |
| arom. hydrocarbon mixture C₉-C₁₂ | 75 % | 60 % | - | - |

The solutions are suitable for application in the form of microdrops.

| F3. Wettable powders | a) | b) | c) | d) |
|---|---|---|---|---|
| active ingredient mixture | 5 % | 25 % | 50 % | 80 % |
| sodium lignosulfonate | 4 % | - | 3 % | - |
| sodium lauryl sulfate | 2 % | 3 % | - | 4 % |
| sodium diisobutylnaphthalene- | | | | |
| sulfonate | - | 6 % | 5 % | 6 % |
| octylphenol polyglycol ether (7-8 mol of ethylene oxide) | - | 1 % | 2 % | - |
| highly disperse silicic acid | 1 % | 3 % | 5 % | 10 % |
| kaolin | 88 % | 62 % | 35 % | - |

The active ingredient is thoroughly mixed with the adjuvants and the mixture is thoroughly ground in a suitable mill, yielding wettable powders which can be diluted with water to give suspensions of any desired concentration.

| F4. Coated granules | a) | b) | c) |
|---|---|---|---|
| active ingredient mixture | 0.1 % | 5 % | 15 % |
| highly disperse silicic acid | 0.9% | 2 % | 2 % |
| inorg. carrier (diameter 0.1 - 1 mm) e.g. CaCO₃ or SiO₂ | 99.0 % | 93 % | 83 % |

The active ingredient is dissolved in methylene chloride, the solution is sprayed onto the carrier and the solvent is subsequently evaporated off *in vacuo.*

| F5. Coated granules | a) | b) | c) |
|---|---|---|---|
| active ingredient mixture | 0.1 % | 5 % | 15 % |
| polyethylene glycol MW 200 | 1.0 % | 2 % | 3 % |
| highly disperse silicic acid | 0.9 % | 1 % | 2 % |
| inorg. carrier (diameter 0.1 - 1 mm) e.g. CaCO₃ or SiO₂ | 98.0 % | 92 % | 80 % |

The finely ground active ingredient is applied uniformly, in a mixer, to the carrier moistened with polyethylene glycol. Non-dusty coated granules are obtained in this manner.

| F6. Extruder granules | a) | b) | c) | d) |
|---|---|---|---|---|
| active ingredient mixture | 0.1 % | 3 % | 5 % | 15 % |
| sodium lignosulfonate | 1.5 % | 2 % | 3 % | 4 % |
| carboxymethylcellulose | 1.4 % | 2 % | 2 % | 2 % |
| kaolin | 97.0 % | 93 % | 90 % | 79 % |

The active ingredient is mixed and ground with the adjuvants and the mixture is moistened with water. The resulting mixture is extruded and then dried in a stream of air.

| F7. Dusts | a) | b) | c) |
|---|---|---|---|
| active ingredient mixture | 0.1 % | 1 % | 5 % |
| talcum | 39.9% | 49% | 35% |
| kaolin | 60.0 % | 50 % | 60 % |

Ready-to-use dusts are obtained by mixing the active ingredient with the carriers and grinding the mixture in a suitable mill.

| F8. Suspension concentrates | a) | b) | c) | d) |
|---|---|---|---|---|
| active ingredient mixture | 3% | 10 % | 25% | 50% |
| ethylene glycol | 5% | 5% | 5% | 5% |
| nonylphenol polyglycol ether (15 mol of ethylene oxide) | - | 1 % | 2 % | - |
| sodium lignosulfonate | 3% | 3% | 4% | 5% |
| carboxymethylcellulose | 1 % | 1 % | 1 % | 1 % |
| 37 % aqueous formaldehyde solution | 0.2 % | 0.2 % | 0.2 % | 0.2 % |
| silicone oil emulsion | 0.8 % | 0.8 % | 0.8 % | 0.8 % |
| water | 87 % | 79 % | 62 % | 38 % |

The finely ground active ingredient is intimately mixed with the adjuvants, yielding a suspension concentrate from which suspensions of any desired concentration can be prepared by dilution with water.

It is often more practical for the compounds of formula la to Ik and the mixing partner of formula II to be formulated separately and then to be combined in the applicator in the desired mixing ratio in the form of a "tank mixture" in water shortly before application.
The ability of the safeners of formula II to protect crop plants against the phytotoxic action of herbicides of formula Ia to Ik is illustrated in the following Examples.

### Biological Examples

### Example B1: Post-emergence test:

The test plants are raised to a post-application stage in seed trays under greenhouse conditions. A standard soil is used as cultivation substrate. At a post-emergence stage, the herbicides, both alone and in admixture with safeners, are applied to the test plants or to crop plants the seeds of which have been dressed with safeners. Application is made using an aqueous suspension of the test compounds, prepared from a 25 % wettable powder (Example F3, b)) or a suspension concentrate (Example F8) using 500 litres water/ha. The tests are evaluated 2 to 4 weeks later (100 % = plant is completely dead; 0 % = no phytotoxic action on the plant). The test compounds exhibit good results.

## Claims

1. A selectively herbicidal composition which, in addition to comprising formulation adjuvants, such as carriers, solvents and surface-active substances, comprises as active ingredient a mixture of
a) a herbicidally effective amount of at least one HPPD inhibitor herbicide selected from the group consisting of the compounds of formula la 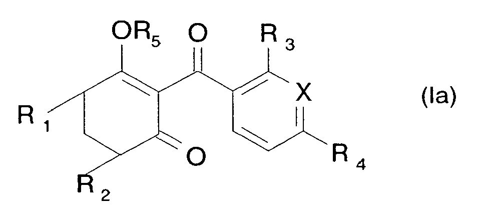 wherein R₁ und R₂ are hydrogen or together an ethylen bridge;
R₃ is C₁-C₄alkyl, halogen, nitro, C₁-C₄alkoxy-C₁-C₄alkyl, C₁-C₄alkoxy-C₁-C₄alkoxy-C₁-C₄alkyl; or R₃ is a group 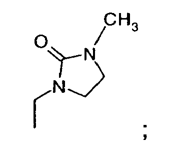 R₄ is C₁-C₄alkylsulfonyl or C₁-C₄haloalkyl;
R₅ is hydrogen or phenylthio;
X is methine, nitrogen or C-R₆, wherein R₆ is C₁-C₄haloalkoxy-C₁-C₄alkyl or a group 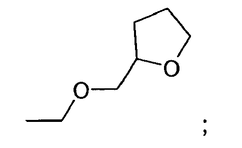 the compounds of formula lb 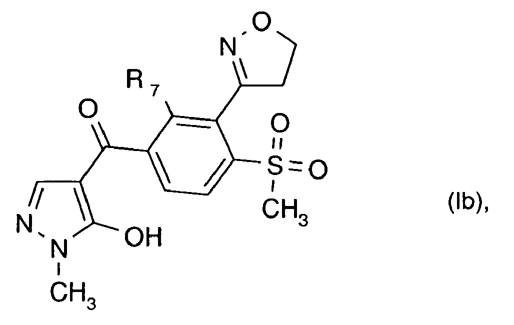 wherein R₇ is methyl or chlorine; the compounds of formula Ic 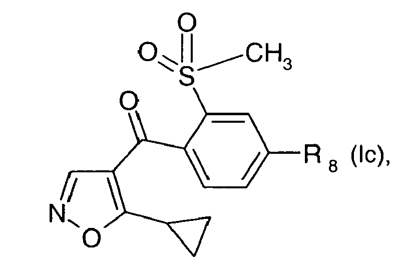 wherein R₈ is halogen or C₁-C₄haloalkyl; the compound of formula Id 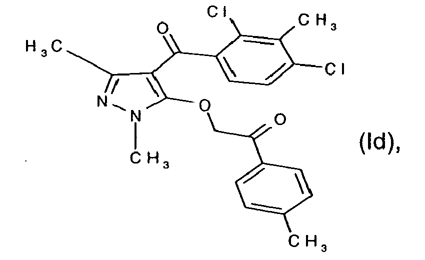 the compound of formula le 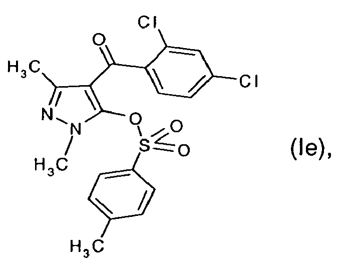 the compound of formula If 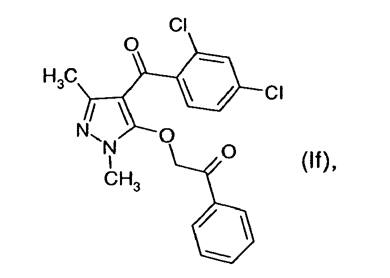 the compound of formula Ig 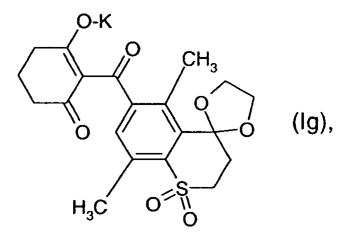 and the free acid thereof, the compound of formula Ih 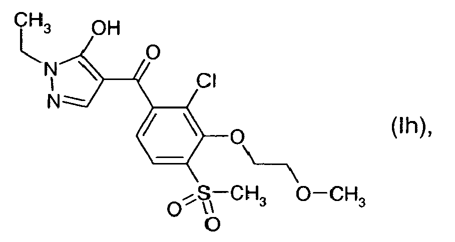 the compound of formula Ii 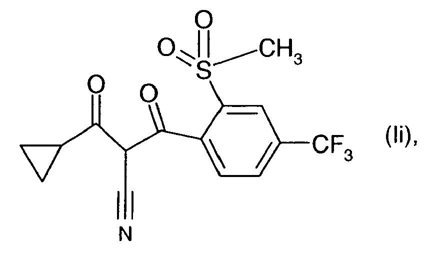 the compound of formula Ij 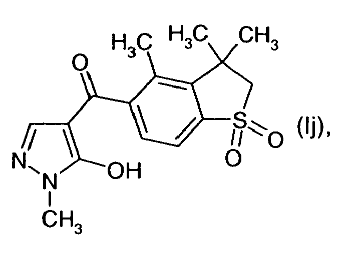 and the compound of formula Ik 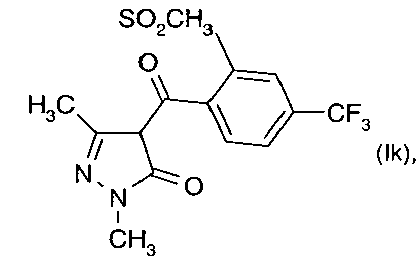 and
b) an amount, effective for herbicide antagonism, of a safener of formula ll 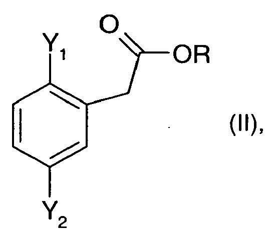
wherein R is hydrogen or C₁-C₆alkyl; and
Y₁ and Y₂ independently from each other, are hydroxy or C₁-C₆alkylcarbonyloxy; and agronomically acceptable salts of these compounds.

2. A method of selectively controlling weeds and grasses in crops of useful plants, which comprises treating the useful plants or propagation material thereof or the area under cultivation thereof simultaneously or at different times with a herbicidally effective amount of a HPPD inhibitor herbicide of formula la to Ik according to claim 1 and an amount, effective for herbicide antagonism, of a safener of formula II according to claim 1.

3. A method of protecting crops of useful plants from the herbicidal injury of at least one HPPD inhibitor herbicide selected from the group consisting of the compounds of formula la 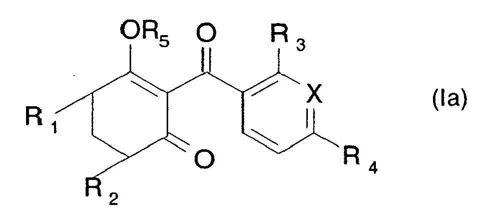 wherein R₁ und R₂ are hydrogen or together an ethylen bridge;
R₃ is halogen, nitro, C₁-C₄alkoxy-C₁-C₄alkyl, C₁-C₄alkoxy-C₁-C₄alkoxy-C₁-C₄alkyl; or R₃ is a group 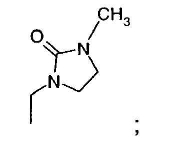 R₄ is C₁-C₄alkylsulfonyl or C₁-C₄haloalkyl;
R₅ is hydrogen or phenylthio;
X is methine, nitrogen or C-R₆, wherein R₆ is C₁-C₄haloalkoxy-C₁-C₄alkyl or a group 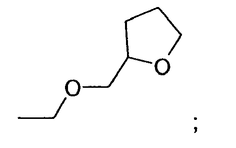 the compounds of formula lb 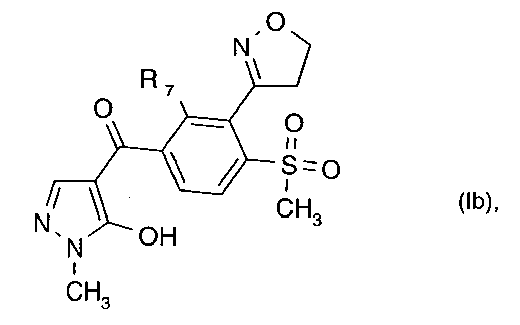 wherein R₇ is methyl or chlorine; the compounds of formula lc 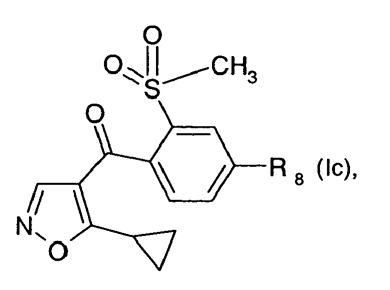 wherein R₈ is halogen or C₁-C₄haloalkyl; the compound of formula ld 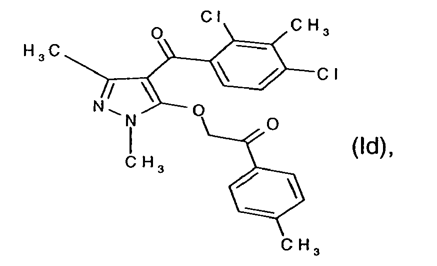 the compound of formula le 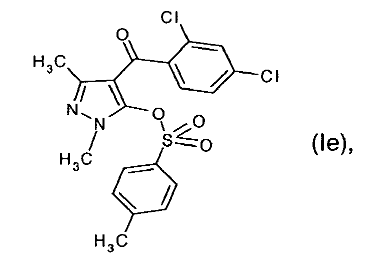 the compound of formula lf 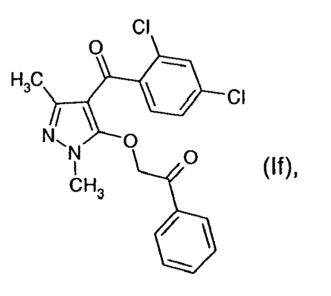 the compound of formula lg 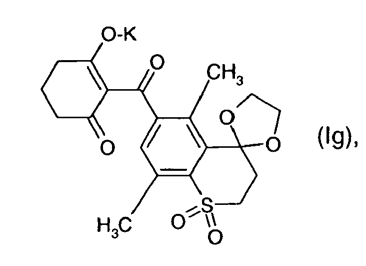 and the free acid thereof, the compound of formula lh 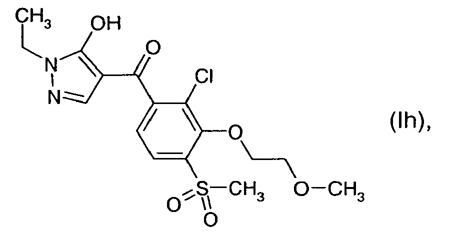 the compound of formula li 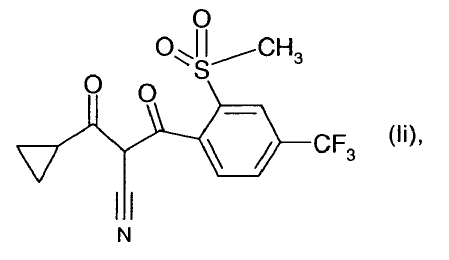 the compound of formula Ij 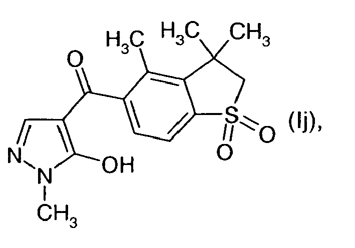 and the compound of formula Ik 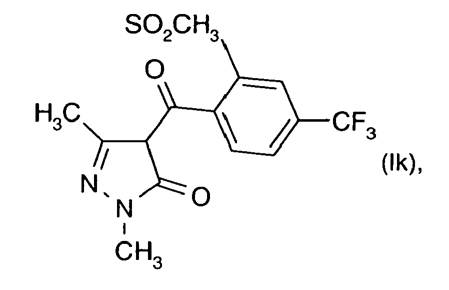 which comprises
treating the useful plants or propagation material thereof or the area under cultivation thereof, after said herbicide has been applied, with an amount, effective for herbicide antagonism, of a safener of formula II 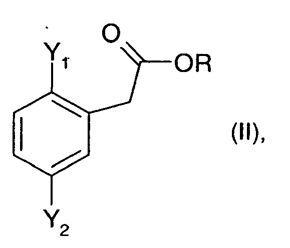 wherein R is hydrogen or C₁-C₆alkyl; and
Y₁ and Y₂ independently from each other, are hydroxy or C₁-C₆alkylcarbonyloxy; and agronomically acceptable salts of these compounds.

4. A method according to claim 3, wherein the crop of useful plants is soya.

5. A method for the protection of soya crops from the herbicidal injury of a HPPD inhibitor herbicide of formula la to Ik according to claim 3, wherein
a) said soya crops are sown as a rotational crop to maize on the same area under cultivation,
b) said maize crops have been treated with said HPPD inhibitor herbicide,
c) said soya crop is treated with a herbicide which is different from said HPPD inhibitor herbicide, **characterised in that**
said soya crops or propagation material thereof or the area under cultivation thereof are treated with an amount, effective for herbicide antagonism, of a compound of formula II according to claim 3.
